# EUROPÄISCHE PATENTANMELDUNG

(11) **EP 2 466 488 A2**
(43) Veröffentlichungstag der Anmeldung: **20.06.2012**
(21) Anmeldenummer: 11008208.8
(22) Anmeldetag: 11.10.2011
(51) Int. Cl.: G06F 17/28

(54) **Verfahren und System zur rechnergestützen Durchführung eines Lektoratsprozesses bei der Erstellung von Übersetzungen**

(30) Priorität: 17.12.2010 DE 102010055050
(71) Anmelder: Eskenazy, Albert, 45355 Essen (DE)
(72) Erfinder: Eskenazy, Albert, 45355 Essen (DE); Zur, Daniel, 47665 Sonsbeck (DE)
(74) Vertreter: Methling, Frank-Oliver

(57) **Zusammenfassung**

Die Erfindung betrifft ein Verfahren sowie ein System zur rechnergestützten Durchführung eines Lektoratsprozesses (8) bei der Erstellung von Übersetzungen von Texten aus einer Quellsprache in eine Zielsprache, wobei die Übersetzungen einzelner Begriffe und/oder von Wortfolgen in die Zielsprache aus einer Datenbank (4) entnommen werden, wobei ein Quelldokument (1) in der Quellsprache in elektronischer Form bereitgestellt und eingelesen (2) wird, mit folgenden Schritten:
• Generierung einer ersten Zuordnungstabelle (7) einzelner Begriffe und/oder Wortfolgen des Quelldokumentes (1) sowie der jeweiligen Übersetzung der Begriffe und/oder Wortfolgen aus der Datenbank (4),
• Lektorieren (8) der Übersetzungen in der Zuordnungstabelle (7) und
• Vergleich der lektorierten Zuordnungstabelle (9) mit der ersten Zuordnungstabelle (7) und
• Übernahme von Änderungen einzelner Begriffe und/oder Wortfolgen für sämtliche Wiederholungen innerhalb der lektorierten Zuordnungstabelle (9) und Abspeichern der lektorierten Zuordnungstabelle (9) sowie
• Rückschreiben (11) der Änderungen aus der lektorierten Zuordnungstabelle (9) in die Datenbank (4) durch Überschreiben des jeweiligen Datenbankeintrages für die lektorierten Begriffe und/oder lektorierten Wortfolgen.

## Beschreibung

Die Erfindung betrifft ein Verfahren und ein System zur rechnergestützten Durchführung eines Lektoratsprozesses bei der Erstellung von Übersetzungen von Texten aus einer Quellsprache in eine Zielsprache, wobei die Übersetzungen einzelner Begriffe und/oder von Wortfolgen in die Zielsprache von einer Datenbank bereitgestellt und aus dieser entnommen werden, wobei ein Quelldokument in der Quellsprache in elektronischer Form bereitgestellt und eingelesen wird, welches den zu übersetzenden Text aufweist, insbesondere Formatierungsvorschriften für einzelne Begriffe und/oder Wortfolgen des Textes aufweist.

Derartige Verfahren und Systeme sind bekannt. Dabei werden Datenbanken zur Erstellung der Übersetzungen der Quelltexte in die Zielsprache herangezogen. Die Verfahrensweise ist dabei diejenige, dass eine vollständige Übersetzung erstellt und einem Lektoratsprozess zugeführt wird, d.h. dass im Rahmen dieses Lektorats Änderungen und Korrekturen an einzelnen Wörter und/oder Passagen der Übersetzung durchgeführt werden.

Mit dem Lektorat bzw. Lektoratsprozess ist dabei die Überprüfung und gegebenenfalls Korrektur eines übersetzten Textes durch einen Übersetzer, zweiten Prüfer und/oder den Kunden gemeint. Danach ist es erforderlich, die Änderungen zu übernehmen, um die Übersetzung sodann zur weiteren Verwendung, insbesondere zur Erstellung der übersetzten Druckschrift, freigeben zu können.

Nachteilig ist dabei, dass die einzelnen Änderungen, die zum Teil handschriftlich in die Übersetzungen eingefügt werden, später von Hand in die Übersetzungen eingearbeitet werden müssen. Besonders problematisch ist dabei, wenn größere Projekte von verschiedenen Personen lektoriert werden, dass identische Wortfolgen oder Passagen möglicherweise in der Übersetzung unterschiedlich wiedergegeben werden. Gerade hierin liegt eine große Fehlerquelle. Auch besteht die Gefahr, dass bereits lektorierte Passagen versehentlich erneut geändert und bereits durchgeführte Korrekturen ungewollt wieder verworfen werden. Hieraus resultieren eine Vielzahl von Fehlerquellen sowie ein erheblicher unnötiger Mehraufwand bei der Erstellung der Übersetzungen von Texten aus einer Quellsprache in eine Zielsprache.

Ferner besteht die Gefahr, dass zwar der aktuell zu übersetzende Text nach der Durchführung des Lektoratsprozesses freigegeben werden kann, jedoch bei Anfertigung der nächsten Übersetzung wieder die gleichen Wörter und/oder Passagen überarbeitet, d.h. geändert und korrigiert werden müssen, wenn die Übersetzungen der Datenbank entnommen werden und diese erneut geprüft und eventuell geändert werden müssen.

Die Aufgabe der Erfindung ist es, ein Verfahren und ein System der eingangs genannten Art derart weiter zu bilden, welche die genannten Nachteile überwinden und ein Verfahren und ein System zur rechnergestützten Durchführung eines Lektoratsprozesses bei der Erstellung von Übersetzungen von Texten aus einer Quellsprache in eine Zielsprache geschaffen werden, welche mögliche Fehlerquellen ausschließen und eine schnellere und zuverlässigere Erstellung der Übersetzung ermöglichen sowie insbesondere eine bessere Qualitätssicherung ermöglichen.

Diese Aufgabe wird erfindungsgemäß durch ein Verfahren gemäß Anspruch 1 sowie ein System gemäß Anspruch 8 gelöst. Vorteilhafte Weiterbildungen der Erfindung sind in den jeweiligen abhängigen Ansprüchen angegeben. Erfindungsgemäß sind bei dem Verfahren zur rechnergestützten Durchführung eines Lektoratsprozesses bei der Erstellung von Übersetzungen von Texten aus einer Quellsprache in eine Zielsprache, wobei die Übersetzungen einzelner Begriffe und/oder von Wortfolgen in die Zielsprache von einer Datenbank bereitgestellt und aus dieser entnommen werden, wobei ein Quelldokument in der Quellsprache in elektronischer Form bereitgestellt und eingelesen wird, welches den zu übersetzenden Text aufweist, insbesondere Formatierungsvorschriften für einzelne Begriffe und/oder Wortfolgen des Textes aufweist, die folgenden Schritte vorgesehen:
- Generierung einer ersten Zuordnungstabelle einzelner Begriffe und/oder Wortfolgen des Quelldokumentes sowie der jeweiligen Übersetzung der Begriffe und/oder Wortfolgen aus der Datenbank,
- Lektorieren der Übersetzungen in der Zuordnungstabelle und
- Vergleich der lektorierten Zuordnungstabelle mit der ersten Zuordnungstabelle zur Ermittlung durchgeführter Änderungen innerhalb der Zuordnungstabelle und
- Übernahme von Änderungen einzelner Begriffe und/oder Wortfolgen für sämtliche Wiederholungen innerhalb der lektorierten Zuordnungstabelle und Abspeichern der lektorierten Zuordnungstabelle sowie
- Rückschreiben der Änderungen aus der lektorierten Zuordnungstabelle in die Datenbank durch Überschreiben des jeweiligen Datenbankeintrages für die lektorierten Begriffe und/oder lektorierten Wortfolgen.

Der Kern der Erfindung ist dabei die Generierung der ersten Zuordnungstabelle einzelner Begriffe und/oder Wortfolgen des Quelldokumentes sowie der jeweiligen Übersetzung der Begriffe und/oder Wortfolgen aus der Datenbank. Diese Zuordnungstabelle kann in Form einer elektronischen Datei abgespeichert und an einen Korrekteur und/oder den Kunden oder dergleichen zur Durchführung des Lektoratsprozesses übergeben werden. Diese Datei kann ein beliebiges Dateiformat, wie beispielsweise in Form einer Textdatei und/oder in Form einer mittels eines übliches Textverarbeitungsprogramms und/oder Tabellenkalkulationsprogramms oder dergleichen auf einer beliebigen Rechneranlage bearbeitbaren Dateiformates haben, um eine größtmögliche Kompatibilität des erfindungsgemäßen Verfahrens zu ermöglichen.

Nach dem Abschluss dieses Lektoratprozesses an der Zuordnungstabelle erfolgt erfindungsgemäß ein Vergleich der lektorierten Zuordnungstabelle mit der ersten Zuordnungstabelle zur Ermittlung durchgeführter Änderungen innerhalb der Zuordnungstabelle und sodann die Übernahme von Änderungen einzelner Begriffe und/oder Wortfolgen für sämtliche Wiederholungen innerhalb der lektorierten Zuordnungstabelle und Abspeichern der lektorierten Zuordnungstabelle.

Durch die Übernahme der durchgeführten Änderungen für alle identischen Wiederholungen bestimmter Begriffe bzw. ganzer Passagen ist gewährleistet, dass die erstellte Übersetzung insgesamt konsistent ist und keine Widersprüche enthält.

Abschließend erfolgt bei dem erfindungsgemäßen Verfahren ein Rückschreiben der Änderungen aus der lektorierten Zuordnungstabelle in die Datenbank durch Überschreiben des jeweiligen Datenbankeintrages für die lektorierten Begriffe und/oder lektorierten Wortfolgen, um diese für weitere Übersetzungen verfügbar zu machen und weiterhin zu gewährleisten, dass bereits lektorierte Begriffe, Termini und Passagen nicht erneut überprüft und eventuell korrigiert werden müssen. Hierdurch wird auch für spätere Projekte eine hohe Qualität der Übersetzung gewährleistet, da in die Datenbank die jeweiligen Korrekturen übernommen werden.

Gerade in dieser Vorgehensweise liegt ein sehr großer Vorteil der Erfindung gegenüber dem Stand der Technik, bei dem auf statische Datenbanken zurückgegriffen wird und mehrere verschiedene Übersetzungen gegebenenfalls immer wieder dieselben Korrekturen erforderlich machen, woraus ein entsprechender Mehraufwand und mögliche Fehlerquellen resultieren.

Durch die Erfindung wird es möglich, die im Rahmen des Lektoratsprozesses durchgeführten Änderungen mit hoher Zuverlässigkeit zu übernehmen und diese durch Abspeichern in der Datenbank für zukünftige Übersetzungsprojekte verfügbar zu machen.

Mit Wortfolgen sind dabei auch längere Abschnitte im Text und/oder Textbausteine beliebiger Länge gemeint sein.

Vorzugsweise sind die einzelnen Begriffe und/oder Wortfolgen in der Übersetzung beim jeweiligen ersten Auftreten in der Zuordnungstabelle editierbar sind, wobei Wiederholungen der Übersetzung einzelner Begriffe und/oder von Wortfolgen in der Zuordnungstabelle nicht editierbar sind.

Es ist dabei sehr vorteilhaft, dass die einzelnen Begriffe und/oder Wortfolgen in der Übersetzung beim jeweiligen ersten Auftreten in der Zuordnungstabelle editierbar sind, wobei Wiederholungen der Übersetzung einzelner Begriffe und/oder von Wortfolgen in der Zuordnungstabelle nicht editierbar sind. Innerhalb der Zuordnungstabelle auftretende Wiederholungen können dabei in anderer Farbe, beispielsweise in grau anstelle von schwarzem Text, dargestellt sein, als die editierbaren, d.h. änderbaren Abschnitte und Einträge der Tabelle.

Dadurch, dass jeweils immer nur der erste in der Zuordnungstabelle auftretende Eintrag sich identisch wiederholender Einträge editierbar, d.h. änderbar ist, und die Wiederholungen innerhalb der Tabelle quasi eingefroren sind, ist es ausgeschlossen, bereits einmal lektorierte Passagen versehentlich erneut zu überarbeiten und dabei Gefahr zu laufen, in einem erneuten Lektoratsprozess diese bereits korrigierte Passage in anderer Weise zu lektorieren, da dann eine weitere Bearbeitung bzw. Übernahme der Übersetzung in den weiteren Produktionsprozess und eine Druckfreigabe nicht ohne eine erneute Überprüfung und Überarbeitung möglich wäre.

Vorzugsweise enthält die Zuordnungstabelle zusätzlich die Formatierungsvorschriften für einzelne Begriffe und/oder Wortfolgen des Quelldokumentes und der jeweiligen Übersetzung. Diese Formatierungsvorschriften werden dem zu übersetzenden Originaldokument entnommen und auf die Übersetzung der einzelnen Begriffe und/oder Wortfolgen, womit auch Nummern oder Nummerfolgen und dergleichen umfasst sind, ebenso angewandt, sodass nach Abschluss des Lektoratsprozesses die erstellte Übersetzung mitsamt den einzelnen Formatierungsvorschriften dem weiteren Produktionsprozess bis hin zum Druck zugeführt werden kann.

Besonders bevorzugt enthält die Zuordnungstabelle zusätzlich die Formatierungsvorschriften für einzelne Begriffe und/oder Wortfolgen des Quelldokumentes und der jeweiligen Übersetzung, wobei die Formatierungsvorschriften kleiner als der zu übersetzende Text und die Übersetzung und/oder farblich abweichend von dem zu übersetzenden Text und der Übersetzung dargestellt werden.

Dadurch, dass die Formatierungsvorschriften für einzelne Begriffe und/oder Wortfolgen des Quelldokumentes und der jeweiligen Übersetzung kleiner als der zu übersetzende Text und die Übersetzung und/oder farblich abweichend von dem zu übersetzenden Text und der Übersetzung dargestellt werden, wird die Lesbarkeit erleichtert und hierdurch die Bearbeitung für den Lektor erleichtert.

In einer bevorzugten Ausführungsform werden Gruppen von Formatierungsvorschriften kodiert und in die Zuordnungstabelle aufgenommen, die zur Erstellung der Endfassung der Übersetzung dekodiert werden.

Hierdurch können Gruppen von Formatierungsvorschriften zu Kurzvorschriften in Form eines Kodierungsprozesses zusammengefasst werden, wobei nach Abschluss des Lektoratsprozesses diese Kurzvorschriften durch ein entsprechendes Dekodieren wieder zu den entsprechenden Gruppen von Formatierungsvorschriften zurückgewandelt werden, um die weitere korrekte Textverarbeitung im weiteren Produktionsprozess zu ermöglichen. Durch das Zusammenfassen ganzer Gruppen von Formatierungsvorschriften zu Kurzvorschriften innerhalb der Zuordnungstabelle wird die Lesbarkeit dieser Tabelle weiter verbessert und die Bearbeitung und das Lektorat dementsprechend weiter vereinfacht.

Besonders bevorzugt enthält die Zuordnungstabelle zusätzlich die Formatierungsvorschriften für einzelne Begriffe und/oder Wortfolgen des Quelldokumentes und der jeweiligen Übersetzung, wobei die Formatierungsvorschriften innerhalb der Zuordnungstabelle nicht editierbar sind.

Dadurch, dass die Formatierungsvorschriften innerhalb der Zuordnungstabelle nicht editierbar sind, wird versehentlichen Änderungen dieser Formatierungsvorschriften im Rahmen des Lektorats vorgebeugt, wobei insbesondere Gruppen von Formatierungsvorschriften zu Kurzvorschriften innerhalb der Zuordnungstabelle zusammengefasst sein können. Hierdurch können Fehler im Hinblick auf die Formatierung des Textes vermieden werden.

Vorzugsweise werden bereits geänderte einzelne Begriffe und/oder Wortfolgen in der Zuordnungstabelle gesperrt und sind nicht wiederholt änderbar und müssen für ein wiederholtes Lektorieren freigegeben werden, insbesondere dass erneut eine erste Zuordnungstabelle zur Durchführung eines weiteren Lektoratsprozesses erstellt werden muss.

Hierdurch werden Doppelarbeiten vermieden, indem bereits lektorierte Passagen in der Übersetzung für weitere Änderungen gesperrt werden, insbesondere werden auch mögliche Widersprüche vermieden, die insbesondere dann auftreten können, wenn mehrere Personen unabhängig voneinander den Lektoratsprozess bei größeren Übersetzungsprojekten durchführen.

Besonders vorteilhaft bei dem System zur rechnergestützten Durchführung eines Lektoratsprozesses bei der Erstellung von Übersetzungen von Texten aus einer Quellsprache in eine Zielsprache, insbesondere zur Durchführung des Verfahrens nach einem der vorherigen Ansprüche, wobei das System eine Datenbankschnittstelle aufweist, mittels derer die Übersetzungen einzelner Begriffe und/oder von Wortfolgen in die Zielsprache aus einer Datenbank ausgelesen und bereitgestellt werden, wobei das System ein Erfassungsmodul aufweist, mittels dessen ein Quelldokument in der Quellsprache in Form einer elektronischen Datei eingelesen wird, wobei die Datei den zu übersetzenden Text aufweist, insbesondere Formatierungsvorschriften für einzelne Begriffe und/oder Wortfolgen des Textes aufweist, ist es, dass das System ein Übersetzungsmodul aufweist, mittels dessen eine elektronische Datei mit einer Zuordnungstabelle einzelner Begriffe und/oder Wortfolgen des Quelldokumentes sowie der jeweiligen Übersetzung aus der Datenbank generiert und an eine Übergabeschnittstelle übergeben wird, wobei das System ein Überprüfungsmodul aufweist, mittels dessen die Datei mit der Zuordnungstabelle nach Durchführung eines Lektorats auf etwaige Änderungen der Übersetzungen einzelner Begriffe und/oder Wortfolgen in der Zuordnungstabelle überprüft wird, wobei mittels des Überprüfungsmoduls eine Übernahme der Änderungen für sämtliche Wiederholungen innerhalb der Zuordnungstabelle durchgeführt wird und die modifizierte Zuordnungstabelle an die Datenbankschnittstelle übergeben wird und mittels der Datenbankschnittstelle in der Datenbank ein Überschreiben des jeweiligen Datenbankeintrages der geänderten Übersetzungen einzelner Begriffe und/oder Wortfolgen erfolgt.

Vorzugsweise sind die einzelnen Begriffe und/oder Wortfolgen in der Übersetzung beim jeweiligen ersten Auftreten in der Zuordnungstabelle editierbar, wobei Wiederholungen der Übersetzung einzelner Begriffe und/oder von Wortfolgen in der Zuordnungstabelle nicht editierbar sind.

Besonders bevorzugt werden bei dem System mittels eines Formatierungsmoduls Formatierungsvorschriften für einzelne Begriffe und/oder Wortfolgen des Quelldokuments kodiert und an das Übersetzungsmodul zur Erstellung der Zuordnungstabelle übergeben, wobei nach Durchführung des Lektorats der Zuordnungstabelle mittels des Formatierungsmoduls die kodierten Formatierungsvorschriften aus der lektorierten und modifizierten Zuordnungstabelle dekodiert und zusammen mit den übersetzten Begriffen und/oder Wortfolgen an ein Schnittstellenmodul übergeben, insbesondere in einem Speicher abgelegt werden.

Durch die Beibehaltung und Übernahme der Formatierungsvorschriften, wie beispielsweise Schriftart, Schriftgröße, Schriftfarbe und dergleichen, ist es möglich, die erstellte Übersetzung unmittelbar in dem folgenden Produktionsprozess weiter zu verarbeiten und eine Druckvorlage zu erstellen. Hierin besteht ein sehr großer Vorteil des erfindungsgemäßen Verfahrens und Systems gegenüber dem Stand der Technik, bei dem einerseits zunächst eine Übersetzung erstellt werden musste, die nach dem Lektoratsprozess freigegeben wird, um sodann anhand der Übersetzung eine Druckvorlage zu produzieren, die sich hinsichtlich der Formatvorschriften an der Originalvorlage in der Ursprungssprache orientiert. Dadurch, dass es die Erfindung ermöglicht, diese Formatierungsvorschriften mitsamt der Übersetzung dem weiteren Produktionsprozess zu übergeben, wird dieser insgesamt optimiert und abgekürzt.

Ferner betrifft die Erfindung ein Computerprogrammprodukt umfassend ein auf einem Computer lauffähiges Computerprogramm mit Programmanweisungen, welches das erfindungsgemäße Verfahren durchführt, wenn es auf einem Rechnersystem ausgeführt wird.

Ein Ausführungsbeispiel der Erfindung ist in der Figur dargestellt und wird nachfolgend erläutert. Es zeigt:

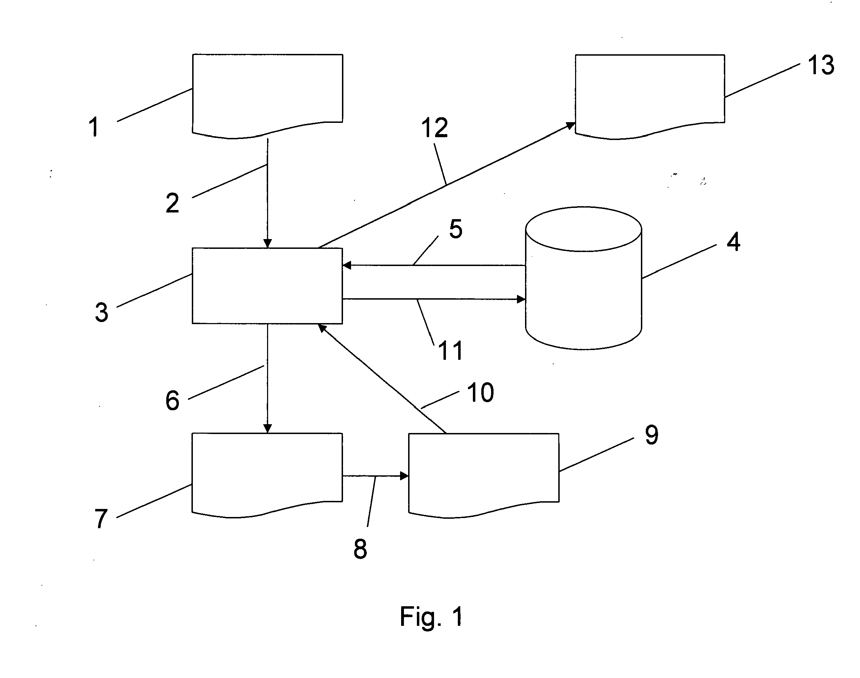

- Figur 1: Ein Schema des Verfahrens zur rechnergestützten Durchführung eines Lektoratsprozesses bei der Erstellung von Übersetzungen von Texten aus einer Quellsprache in eine Zielsprache.

In Figur 1 ist dargestellt der schematische Ablauf des Verfahrens zur rechnergestützten Durchführung eines Lektoratsprozesses bei der Erstellung von Übersetzungen von Texten aus einer Quellsprache in die Zielsprache.

Dabei wird ein Originaldokument 1 in Form einer elektronischen Datei übernommen und in einem Prozess 2 eingelesen. Bei diesem Lesevorgang 2 wird das Quelldokument 1 in ein maschinenlesbares Dokument umgewandelt, welches neben dem eigentlichen Text auch die entsprechenden Formatierungsvorschriften, so genannte Tags enthält, sodass eine maschinenlesbare Datei beispielsweise in Form eines HTML-Dokumentes oder XML-Dokumentes oder dergleichen erhalten wird.

Innerhalb des Moduls 3 erfolgt einerseits die Zusammenfassung von Gruppen von Formatierungsvorschriften zu abgekürzten Einzelvorschriften und ferner die Erstellung der Zuordnungstabelle 7.

Die Zuordnungstabelle 7 wird in Form einer Datei zur Verfügung gestellt und enthält 2 Spalten. Die Tabelle 7 enthält den Ausgangstext auf der linken und den Zieltext, d.h. die Übersetzung auf der rechten Seite. Dabei sind jeweils einzelne Begriffe und/oder Wortfolgen oder ganze Passagen aus dem Quelltext 1 der entsprechenden Übersetzung gegenübergestellt.

Die Übersetzung wird erstellt unter Verwendung der Einträge in der Datenbank 4 wozu diese mittels des Moduls 3 ausgelesen wird, wie dies durch den Pfeil 5 dargestellt ist.

Mittels des Moduls 3 wird dann in dem Umwandlungsprozess 6 die Zuordnungstabelle 7 wie beschrieben erstellt.

Die Zuordnungstabelle 7 enthält neben den abgekürzten Formatierungsvorschriften wie erläutert den Originaltext in der linken Spalte sowie gegenübergestellt die entsprechenden Übersetzungen in der rechten Spalte der Tabelle 7, wobei die Übersetzungen in der rechten Spalte innerhalb der Zuordnungstabelle 7 editierbar sind, d.h. im Rahmen des Lektoratsprozesses 8 geändert werden können.

Wiederholungen innerhalb der Zuordnungstabelle 7 sind dabei durch grauen Text markiert. Diese Markierung von Wiederholungen von grauem Text ist auch über Dateigrenzen im Text hinweg möglich. Dieser Text muss nicht geändert werden. Die Änderungen im zuerst vorkommenden Segment werden automatisch für die Übrigen grau dargestellten Segmente übernommen. Der Vorteil liegt in einer höheren Konsistenz der Übersetzung, da der Lektor mehrfach vorkommende Segmente nicht versehentlich unterschiedlich ändern kann. Außerdem kann er durch Überspringen der grauen Segmente viel Zeit beim Lektorat 8 einsparen.

Nach Durchführung des Lektorates 8, d.h. nach Vornahme der entsprechenden gewünschten Änderungen innerhalb der Zuordnungstabelle 7, bei der es sich um eine Textdatei oder eine mittels einem üblichen Tabellenkalkulationsprogramms und/oder Textverarbeitungsprogramms bearbeitbaren Dateiformates handelt, wird die geänderte Zuordnungstabelle 9 wie durch den Pfeil 10 angedeutet an das Bearbeitungsmodul 3 zurück übergeben und durch dieses Modul 3 ausgewertet.

Durch diese Auswertung wird die beschriebene automatische Übernahme sämtlicher durchgeführter Änderungen für alle identischen Textstellen und Passagen entsprechend umgesetzt und sodann vorgenommene Änderungen wie durch den Pfeil 11 dargestellt in der Datenbank 4 gespeichert, d.h. insbesondere für zukünftige Übersetzungsvorgänge abgespeichert durch Überschreiben des entsprechenden Datenbankeintrages in der Datenbank 4, um die durchgeführten Änderungen auch für zukünftige Projekte zur Verfügung zu stellen.

Sodann wird durch das Bearbeitungsmodul 3 aus der lektorierten Zuordnungstabelle das übersetzte Endokument 13 mitsamt dem zurück umgewandelten d.h. den dekodierten Formatierungsvorschriften erstellt.

Dieses Zieldokument 13 kann dann dem weiteren Produktionsprozess zur Erstellung einer Druckvorlage zugeführt werden, da dieses neben der Übersetzung bereits sämtliche Formatierungsvorschriften enthält, die durch das Umwandlungsmodul 3 aus den Kurzvorschriften wieder in Gruppen von Formatierungsvorschriften oder einzelne Formatierungsvorschriften, den sogenannte Tags, zurück dekodiert wurden. Die Ausgabe 12 aus dem Bearbeitungsmodul 3 erfolgt dann in Form der elektronischen Datei 13, die unmittelbar weiter verarbeitet werden kann.

Durch diesen geschilderten Prozess wird somit eine vollständige Übersetzung 13 des ursprünglichen Quelldokumentes 1 im Rahmen dieses Prozesses erstellt, wobei durchgeführte Änderungen, die im Rahmen des Lektoratsprozesses 8 notwendig wurden, automatisch in der Datenbank 4 für zukünftige Projekte abgespeichert werden.

Besonders vorteilhaft ist dabei, dass durch die Verwendung dieses Verarbeitungsmoduls 3 ein Import aus verschiedensten Autorensystemen und sogenannten Content-Mangement-Systemen (CMS) möglich ist, da beliebige Formate der Ausgangsdatei 1 verwendet und eingelesen werden können.

Als Dateiformat für die Zuordnungstabelle 7 kann ein Textdateiformat Verwendung finden, welches Mittels eines beliebigen Editors auf jeder Rechneranlage bearbeitet werden kann, oder es können Dateiformate zur Anwendung gelangen, die mit beliebigen Textverarbeitungsprogrammen und/oder Tabellenkalkulationsprogrammen auf beliebigen Rechneranlagen geöffnet und bearbeitet werden können.

Besonders vorteilhaft bei der Zuordnungstabelle 7 ist es, dass die Formatierungsvorschriften in Kurzform und unter Beibehaltung der Formatierungsmerkmale dargestellt und zusammengefasst werden. Es können ganze Gruppen von Formatierungsvorschriften zu Einzelvorschriften zusammengefasst werden, um die Lesbarkeit der Zuordnungstabelle 7 zu erhöhen und somit die Bearbeitung und das Lektorat 8 zu vereinfachen.

In der Zuordnungstabelle 7, die in der linken Spalte den Ursprungstext und in der rechten Spalte die Übersetzung aufweist, wird der Ausgangstext sowie sämtliche Formatierungsvorschriften geschützt, sodass diese bei dem Lektoratsprozess 8 nicht unbeabsichtigt geändert, respektive beschädigt werden können.

Es erfolgt eine sofortige automatische Übernahme von Änderungen auch in den grauen Segmenten, die Wiederholungen enthalten, sodass ein wiederholtes Lektorieren identischer Passagen nicht erforderlich ist und versehentliche Fehler ausgeschlossen werden.

Die Tabelle 7 ist dabei so eingerichtet, dass der Lektor eine Unterstützung beim Ersetzen von Begriffen durch Filterung des Textes erhält. Dabei werden zum Ändern eines Fachbegriffs nur die Segmente angezeigt, die den zu ändernden Begriff enthalten. Diese Funktionalität der Zuordnungstabelle 7 ist über Dateigrenzen hinweg möglich und sorgt dafür, dass die Änderungen mit einer höheren Zuverlässigkeit global vorgenommen werden. Weiterhin wird die Beibehaltung vorgenommener Änderungen dadurch gewährleistet, dass in der Datenbank 4 eine Abspeicherung 9 vorgenommener Änderungen erfolgt und für zukünftige Projekte zur Verfügung steht.

Sofern es erforderlich ist, dass kontextabhängig in einem wiederholten Textteil abweichend von der Regel eine Passage anders übersetzt wird, kann dies innerhalb der Zuordnungstabelle 7 durch Freischaltung einzelner Passagen ermöglicht werden. Ferner ist die Zuordnungstabelle 7 derart ausgestaltet, dass aus früheren Projekten bereits lektorierte Inhalte ausgeblendet werden, sodass diese zeitsparend übersprungen werden können.

## Patentansprüche

1. Verfahren zur rechnergestützten Durchführung eines Lektoratsprozesses (8) bei der Erstellung von Übersetzungen von Texten aus einer Quellsprache in eine Zielsprache, wobei die Übersetzungen einzelner Begriffe und/oder von Wortfolgen in die Zielsprache von einer Datenbank (4) bereitgestellt und aus dieser entnommen werden, wobei ein Quelldokument (1) in der Quellsprache in elektronischer Form bereitgestellt und eingelesen (2) wird, welches den zu übersetzenden Text aufweist, insbesondere Formatierungsvorschriften für einzelne Begriffe und/oder Wortfolgen des Textes aufweist, **gekennzeichnet durch** folgende Schritte:
• Generierung einer ersten Zuordnungstabelle (7) einzelner Begriffe und/oder Wortfolgen des Quelldokumentes (1) sowie der jeweiligen Übersetzung der Begriffe und/oder Wortfolgen aus der Datenbank (4),
• Lektorieren (8) der Übersetzungen in der Zuordnungstabelle (7) und
• Vergleich der lektorierten Zuordnungstabelle (9) mit der ersten Zuordnungstabelle (7) zur Ermittlung durchgeführter Änderungen innerhalb der Zuordnungstabelle (9) und
• Übernahme von Änderungen einzelner Begriffe und/oder Wortfolgen für sämtliche Wiederholungen innerhalb der lektorierten Zuordnungstabelle (9) und Abspeichern der lektorierten Zuordnungstabelle (9) sowie
• Rückschreiben (11) der Änderungen aus der lektorierten Zuordnungstabelle (9) in die Datenbank (4) **durch** Überschreiben des jeweiligen Datenbankeintrages für die lektorierten Begriffe und/oder lektorierten Wortfolgen.

2. Verfahren nach Anspruch 1, **dadurch gekennzeichnet, dass** die einzelnen Begriffe und/oder Wortfolgen in der Übersetzung beim jeweiligen ersten Auftreten in der Zuordnungstabelle (7) editierbar sind, wobei Wiederholungen der Übersetzung einzelner Begriffe und/oder von Wortfolgen in der Zuordnungstabelle (7) nicht editierbar sind.

3. Verfahren nach Anspruch 1 oder 2, **dadurch gekennzeichnet, dass** die Zuordnungstabelle (7) zusätzlich die Formatierungsvorschriften für einzelne Begriffe und/oder Wortfolgen des Quelldokumentes (1) und der jeweiligen Übersetzung enthält.

4. Verfahren nach einem der vorherigen Ansprüche, **dadurch gekennzeichnet, dass** die Zuordnungstabelle (7) zusätzlich die Formatierungsvorschriften für einzelne Begriffe und/oder Wortfolgen des Quelldokumentes (1) und der jeweiligen Übersetzung enthält, wobei die Formatierungsvorschriften kleiner als der zu übersetzende Text und die Übersetzung und/oder farblich abweichend von dem zu übersetzenden Text und der Übersetzung dargestellt werden.

5. Verfahren nach einem der vorherigen Ansprüche, **dadurch gekennzeichnet, dass** Gruppen von Formatierungsvorschriften kodiert und in die Zuordnungstabelle (7) aufgenommen werden, die zur Erstellung der Endfassung (13) der Übersetzung dekodiert werden.

6. Verfahren nach einem der vorherigen Ansprüche, **dadurch gekennzeichnet, dass** die Zuordnungstabelle (7) zusätzlich die Formatierungsvorschriften für einzelne Begriffe und/oder Wortfolgen des Quelldokumentes (1) und der jeweiligen Übersetzung enthält, wobei die Formatierungsvorschriften innerhalb der Zuordnungstabelle (7) nicht editierbar sind.

7. Verfahren nach einem der vorherigen Ansprüche, **dadurch gekennzeichnet, dass** bereits geänderte einzelne Begriffe und/oder Wortfolgen in der Zuordnungstabelle (7) gesperrt werden und nicht wiederholt änderbar sind und für ein wiederholtes Lektorieren freigegeben werden müssen, insbesondere dass erneut eine erste Zuordnungstabelle (7) zur Durchführung eines weiteren Lektoratsprozesses (8) erstellt werden muss.

8. System zur rechnergestützten Durchführung eines Lektoratsprozesses (8) bei der Erstellung von Übersetzungen von Texten aus einer Quellsprache in eine Zielsprache, insbesondere zur Durchführung des Verfahrens nach einem der vorherigen Ansprüche, wobei das System eine Datenbankschnittstelle aufweist, mittels derer die Übersetzungen einzelner Begriffe und/oder von Wortfolgen in die Zielsprache aus einer Datenbank (4) ausgelesen und bereitgestellt werden, wobei das System ein Erfassungsmodul (3) aufweist, mittels dessen ein Quelldokument in der Quellsprache in Form einer elektronischen Datei (1) eingelesen wird, wobei die Datei den zu übersetzenden Text aufweist, insbesondere Formatierungsvorschriften für einzelne Begriffe und/oder Wortfolgen des Textes aufweist, **dadurch gekennzeichnet, dass** das System ein Übersetzungsmodul aufweist, mittels dessen eine elektronische Datei (7) mit einer Zuordnungstabelle einzelner Begriffe und/oder Wortfolgen des Quelldokumentes sowie der jeweiligen Übersetzung aus der Datenbank (4) generiert und an eine Übergabeschnittstelle übergeben wird, wobei das System ein Überprüfungsmodul aufweist, mittels dessen die Datei (9) mit der Zuordnungstabelle nach Durchführung eines Lektorats auf etwaige Änderungen der Übersetzungen einzelner Begriffe und/oder Wortfolgen in der Zuordnungstabelle überprüft wird, wobei mittels des Überprüfungsmoduls eine Übernahme der Änderungen für sämtliche Wiederholungen innerhalb der Zuordnungstabelle und/oder weiterer externer Dateien durchgeführt wird und die modifizierte Zuordnungstabelle an die Datenbankschnittstelle übergeben wird und mittels der Datenbankschnittstelle in der Datenbank (4) ein Überschreiben des jeweiligen Datenbankeintrages der geänderten Übersetzungen einzelner Begriffe und/oder Wortfolgen erfolgt.

9. System nach Anspruch 8, **dadurch gekennzeichnet, dass** die einzelnen Begriffe und/oder Wortfolgen in der Übersetzung beim jeweiligen ersten Auftreten in der Zuordnungstabelle editierbar sind, wobei Wiederholungen der Übersetzung einzelner Begriffe und/oder von Wortfolgen in der Zuordnungstabelle nicht editierbar sind.

10. System nach Anspruch 8 oder 9, **dadurch gekennzeichnet, dass** mittels eines Formatierungsmoduls Formatierungsvorschriften für einzelne Begriffe und/oder Wortfolgen des Quelldokuments kodiert und an das Übersetzungsmodul zur Erstellung der Zuordnungstabelle übergeben werden, wobei nach Durchführung des Lektorats der Zuordnungstabelle mittels des Formatierungsmoduls die kodierten Formatierungsvorschriften aus der lektorierten und modifizierten Zuordnungstabelle dekodiert und zusammen mit den übersetzten Begriffen und/oder Wortfolgen an ein Schnittstellenmodul übergeben, insbesondere in einem Speicher abgelegt werden.

11. Computerprogrammprodukt umfassend ein auf einem Computer lauffähiges Computerprogramm mit Programmanweisungen, welches das Verfahren nach einem der Ansprüche 1 bis 6 durchführt, wenn es auf einem Rechnersystem ausgeführt wird.
